# EUROPEAN PATENT APPLICATION

(11) **EP 4 797 494 A1**
(43) Date of publication of application: **26.08.2026**
(21) Application number: 26158051.8
(22) Date of filing: 12.02.2026
(51) Int. Cl.: H02J 7/61, H02J 7/62, H02J 7/63, H02J 7/65, H02J 7/60

(54) **BATTERY SYSTEM**

(30) Priority: 25.02.2025 JP 2025028040
(71) Applicant: Prime Planet Energy & Solutions, Inc., Chuo-ku, Tokyo 103-0022 (JP)
(72) Inventor: YANO, Junya, Tokyo, 103-0022 (JP)
(74) Representative: Kuhnen & Wacker Patent- und Rechtsanwaltsbüro PartG mbB

(57) **Abstract**

A herein disclosed battery system 1 includes two kinds of contactors, i.e., a first contactor 40 and a second contactor 50. The first contactor 40 includes a first positive electrode terminal 42 connected to a positive electrode 11Ap of a battery unit 10, and includes a first negative electrode terminal 44 connected via a positive electrode output terminal 20 to an external load 100. In addition, the second contactor 50 includes a second positive electrode terminal 52 connected to a negative electrode 11Nn of the battery unit 10, and includes a second negative electrode terminal 54 connected via a negative electrode output terminal 30 to the external load 100. Then, the herein disclosed battery system 1 is configured to preferentially turn OFF the contactor, in which a forward electric current flows,during both of an electrical charge and an electrical discharge. Accordingly, the electric current can be safely and promptly interrupted, and thus it is possible to inhibit an malfunction due to welding of the contactor.

## Description

### CROSS REFERENCE TO RELATED APPLICATIONS

The present application claims the priority based on Japanese Patent Application No. 2025-028040 filed on February 25, 2025. The entire contents of the prior application are incorporated in the present specification by reference.

### BACKGROUND

### 1. Technical Field

A herein disclosed technique relates to a battery system.

### 2. Description of the Related Art

A battery system, in which a secondary battery is provided as a power supply, is used for various equipments. This battery system includes, for example, a battery unit including a plurality of secondary batteries, and a pair of output terminals connecting a load of an external equipment (which is referred to as "external load", below) and the battery unit. In this battery system, a contactor may be provided between the battery unit and the output terminals. The battery system switches a connection and a disconnection between the battery unit and the external load by ON/OFF of this contactor. In addition, a general contactor has a polarity, and thus, a positive electrode terminal and a negative electrode terminal are provided.

Japanese Patent Application Publication No. 2009-32551 discloses an example of a battery unit that includes the contactor. A power supply device (the battery system) described in this publication is characterized by connecting one of a pair of contactors to a battery (the battery unit) while connection terminals at a positive side and a negative side are in reverse. It describes that the battery system having the above described configuration can promptly interrupt both of a charge electric current and a discharge electric current.

### SUMMARY

However, regarding the battery system described in Japanese Patent Application Publication No. 2009-32551, there is a fear of causing a malfunction that a contact point of the contactor is welded at an electric current interruption time. A herein disclosed technique has been made to solve the above described circumstance.

A herein disclosed battery system includes: a battery unit that comprises a plurality of secondary batteries connected in series; a positive electrode output terminal that connects a positive electrode of the battery unit and an external load; a negative electrode output terminal that connects a negative electrode of the battery unit and the external load; a first contactor that is provided between the battery unit and the positive electrode output terminal and that comprises a positive electrode terminal and a negative electrode terminal; a second contactor that is provided between the battery unit and the negative electrode output terminal and that comprises a positive electrode terminal and a negative electrode terminal; and a detector for detecting whether a direction of an electric current flowing between the battery unit and the external load is a discharge direction in which the battery unit discharges or a charge direction in which the battery unit is charged; and a control device. Then, a disconnection event obtaining part that acquires that a disconnection event has occurred, the disconnection event that requires both the first contactor and the second contactor to be turned OFF so as to disconnect the battery unit and the external load; a determining part that determines whether a direction of the electric current when the disconnection event is generated is the discharge direction or the charge direction; and a disconnection control part that decides the order for turning OFF the first contactor and the second contactor based on a determined result of the determining part. And then, the disconnection control part is configured to preferentially turn OFF a contactor, through which a forward current flows from the positive electrode terminal to the negative electrode terminal, among the first contactor and the second contactor.

As described above, the general contactor includes the positive electrode terminal and the negative electrode terminal. And then, when an electric current from the positive electrode terminal to the negative electrode terminal (which is referred to as "forward electric current", below) flows inside the contactor, the contactor can safely and promptly interrupt the electric current. On the other hand, if the contactor is forcibly turned OFF in a state where an electric current from the negative electrode terminal to the positive electrode terminal (which is referred to as "backward electric current", below) flows inside the contactor, there is a possibility that the contactor heats up. At that time, if a very large electric current flows in the contactor, there is a fear that a contact point of the contactor is welded by a sudden heat up. On this matter, the herein disclosed battery system is configured to determine whether the direction of the electric current at the disconnection event generation time is the discharge direction or the charge direction, so as to preferentially turn OFF the contactor, in which the forward electric current flows from the positive electrode terminal to the negative electrode terminal. Accordingly, the interruption on the electric current with the contactor can be implemented safely and promptly, and thus it is possible to inhibit the malfunction caused by the welding of the contactor.

### BRIEF DESCRIPTION OF THE DRAWINGS

FIG. 1 is a circuit view that shows a battery system in accordance with a first embodiment.
FIG. 2 is a flowchart that shows a control procedure related to a disconnection event of a battery system in accordance with the first embodiment.
FIG. 3 is a flowchart that shows a detailed procedure of an electric current sensor malfunction determining process shown in FIG. 2.
FIG. 4 is a flowchart that shows a determining procedure of a disconnection event in a second embodiment.
FIG. 5 is a flowchart that shows a detailed procedure of a malfunction determination on an electric current sensor in a third embodiment.
FIG. 6 is a circuit view that shows a battery system in accordance with a sixth embodiment.

### DETAILED DESCRIPTION

Below, an embodiment of a herein disclosed technique would be explained. Incidentally, the matters other than matters particularly mentioned in this specification, and required for practicing the present disclosure (for example, parts used for a detailed structure of a battery unit or an external load, or a construction of a battery system, or the like) can be grasped as design matters of those skilled in the art based on the related art in the present field. The herein disclosed technique can be implemented on the basis of contents disclosed in the present specification and a common general technical knowledge.

### <First embodiment>

### 1. Configuration of battery system

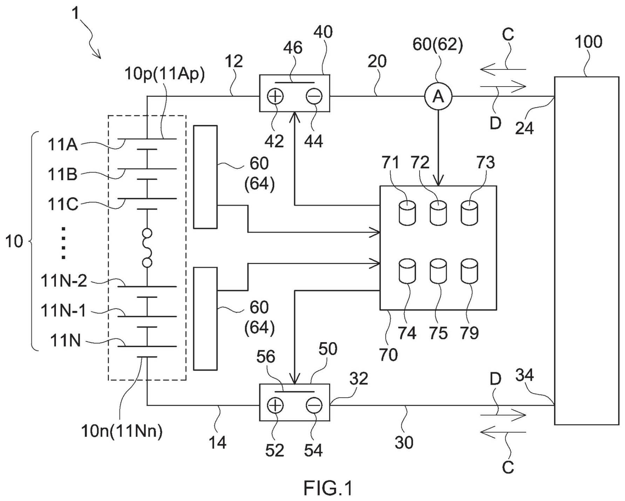

Below, a first embodiment of a herein disclosed battery system would be described. FIG. 1 is a circuit view that shows the battery system in accordance with the first embodiment. The battery system 1 shown in FIG. 1 is connected to an external load 100. This external load 100 semantically covers general devices that operate in response to an electric power supply from the battery system 1. Although not restricting a herein disclosed technique, it is possible as the external load 100, for example, to use an on-vehicle equipment, an air conditioning equipment, a housing equipment, a cooking equipment, a cleaning equipment, an AV equipment, or the like. In addition, the external load 100 may be connected to the battery system 1 via an inverter or a converter that adjusts a power supply electric voltage of the equipment.

Then, the battery system 1 in accordance with the present embodiment includes a battery unit 10, a positive electrode output terminal 20, a negative electrode output terminal 30, a first contactor 40, a second contactor 50, a detector 60, and a control device 70. Below, each of configurations would be described.

### (1) Battery unit

The battery unit 10 is a battery pack that includes a plurality of secondary batteries connected in series. In the present specification, the single secondary battery is referred to as "single battery". The battery unit 10 shown in FIG. 1 includes plural (N) single batteries 11A to 11N. Here, the single battery arranged at one of end parts of the battery unit 10 (at an upper side in FIG. 1) is referred to as "first single battery 11A". On the other hand, the single battery arranged at the other one of the end parts of the battery unit 10 (at a lower side in FIG. 1) is referred to as "n^{th} single battery 11N". In this battery unit 10, each of the plural single batteries 11A to 11N is electrically connected. However, a positive electrode 11Ap of the first single battery 11A is not connected to the other single batteries. To this positive electrode 11Ap of the first single battery 11A, a total positive terminal 12 is connected. On the other hand, a negative electrode 11Nn of the n^{th} single battery 11N is not connected to the other single batteries, either. To the negative electrode 11Nn of the n^{th} single battery 11N described above, a total negative terminal 14 is connected. Incidentally, a number of the single batteries configuring the battery unit 10 is not particularly restricted, and can be suitably changed in consideration of an electric power required by the external load 100, or the like. For example, the number of the single batteries may be equal to or more than 50, may be equal to or more than 75, may be equal to or more than 90, or may be equal to or more than 100. In addition, an upper limit of the number of the single batteries is not particularly restricted either, may be equal to or less than 200, or may be equal to or less than 150.

### (2) Positive electrode output terminal

The positive electrode output terminal 20 is a connecting member that connects a positive electrode 10p of the battery unit 10 and the external load 100. In particular, one end part 22 of the positive electrode output terminal 20 is connected to the positive electrode 11Ap of the first single battery 11A via the first contactor 40 and the total positive terminal 12. In addition, the other end part 24 of the positive electrode output terminal 20 is connected to the external load 100. Incidentally, a part constructing the positive electrode output terminal 20 is not particularly restricted, and it is possible to use a conventionally known conductive member (an electric wire, a bus bar, or the like).

### (3) Negative electrode output terminal

The negative electrode output terminal 30 is a connecting member that connects a negative electrode 10n of the battery unit 10 and the external load 100. In particular, one end part 32 of the negative electrode output terminal 30 is connected to a negative electrode 11Nn of a N^{th} single battery 11N via a second contactor 50 and a total negative terminal 14. In addition, the other end part 34 of the negative electrode output terminal 30 is connected to the external load 100. Incidentally, a part constructing the negative electrode output terminal 30 is not particularly restricted either, and it is possible to use a conductive member which is the same type as the positive electrode output terminal 20.

### (4) First contactor

The first contactor 40 is a contactor that is provided between the battery unit 10 and the positive electrode output terminal 20. As described above, the contactor has a polarity, and thus a positive electrode terminal and a negative electrode terminal are provided. In the present specification, the positive electrode terminal of the first contactor 40 is referred to as a first positive electrode terminal 42. In addition, the negative electrode terminal of the first contactor 40 is referred to as a first negative electrode terminal 44. Incidentally, in the present embodiment, the first positive electrode terminal 42 of the first contactor 40 is connected to the positive electrode 10p of the battery unit 10 (the positive electrode 11Ap of the first single battery 11A). In addition, the first negative electrode terminal 44 of the first contactor 40 is connected to the external load 100 via the positive electrode output terminal 20. In addition, the first contactor 40 includes a first movable contact point 46. When the first contactor 40 is ON, the first movable contact point 46 come into contact with the first positive electrode terminal 42 and the first negative electrode terminal 44. Accordingly, the positive electrode 10p of the battery unit 10 and the external load 100 are connected. On the other hand, when the first contactor 40 is OFF, the first movable contact point 46 moves away from the first positive electrode terminal 42 and the first negative electrode terminal 44. Accordingly, a continuity between the positive electrode 10p of the battery unit 10 and the external load 100 is interrupted.

### (5) Second contactor

The second contactor 50 is a contactor that is provided between the battery unit 10 and the negative electrode output terminal 30. In the present specification, a positive electrode terminal of the second contactor 50 is referred to as a second positive electrode terminal 52. In addition, a negative electrode terminal of the second contactor 50 is referred to as a second negative electrode terminal 54. In the present embodiment, the second positive electrode terminal 52 of the second contactor 50 is connected to the negative electrode 10n of the battery unit 10 (the negative electrode 11Nn of the N^{th} single battery 11N). In addition, the second negative electrode terminal 54 of the second contactor 50 is connected to the external load 100 via the negative electrode output terminal 30. In addition, the second contactor 50 includes a second movable contact point 56. When the second contactor 50 is ON, the second movable contact point 56 comes into contact with the second positive electrode terminal 52 and the second negative electrode terminal 54. Accordingly, the negative electrode 10n of the battery unit 10 and the external load 100 are connected. On the other hand, when the second contactor 50 is OFF, the second movable contact point 56 moves away from the second positive electrode terminal 52 and the second negative electrode terminal 54. Accordingly, a continuity between the negative electrode 10n of the battery unit 10 and the external load 100 is interrupted.

### (6) Detector

The detector 60 detects whether a direction of an electric current flowing between the battery unit 10 and the external load 100 is an discharge direction D in which the electrical discharge is carried out from the battery unit 10 or a charge direction C in which the electrical charge is carried out to the battery unit 10. In particular, the wording "discharge direction D" of the present specification represents a direction in which the electric current flows from the positive electrode 10p of the battery unit 10 through the first contactor 40, the positive electrode output terminal 20, the external load 100, the negative electrode output terminal 30, and the second contactor 50 to the negative electrode 10n of the battery unit 10 as shown in FIG. 1. On the other hand, the wording "charge direction C" of the present specification represents a direction in which the electric current flows from the negative electrode 10n of the battery unit 10 through the second contactor 50, the negative electrode output terminal 30, the external load 100, the positive electrode output terminal 20, and the first contactor 40 to the positive electrode 10p of the battery unit 10.

The detector 60 is an equipment that detects the above described electric current direction. For example, the detector 60 includes an outside sensor and a deciding means that decides the electric current direction based on a detected result of this outside sensor. For example, the deciding means may be stored in a control device 70 described later, or may be disposed separately from the control device 70. On the other hand, as the outside sensor, it is possible to use various sensors that can measure a parameter available for deciding the electric current direction. For example, it is preferable that the detector 60 includes an electric current sensor 62 that detects an electric current value Iₐ flowing in the battery unit 10. For example, the electric current sensor 62 is attached to the positive electrode output terminal 20. In that situation, a predetermined reference electric voltage (for example, about 2.5 V) is set to the deciding means of the detector 60. When the electric current sensor 62 has detected the electric voltage exceeding this reference electric voltage, it can be decided that the electric current flows in the discharge direction D. On the other hand, when the electric voltage being less than the reference electric voltage has been detected, it can be decided that the electric current flows in the charge direction C. Incidentally, as the electric current sensor 62, it is possible, for example, to use a Hall effect sensor or a Shunt resistor sensor. In addition, as the electric current sensor 62, it is possible to use any of an analog sensor outputting an electric current value as the analog signal and a digital sensor outputting the electric current value as an analog signal.

Further, the outside sensor of the detector 60 is not restricted to the electric current sensor 62 insofar as information capable of being used for the decision about the electric current direction can be obtained. For example, as the outside sensor of the detector 60, it is also possible to use an electric voltage sensor 64 that can detect the electric voltage of the battery unit 10. Particularly, in a situation where the battery system 1 is during the electrical charge, the electric voltage of the battery unit 10 is increased over time. Based on this point, the deciding means of the detector 60 can decide that the electric current direction is the charge direction C. On the other hand, in a situation where the battery system 1 is during the electrical discharge, the electric voltage of the battery unit 10 is decreased over time. In that situation, the deciding means can decide that the electric current direction is the discharge direction D.

### (7) Control device

The control device 70 is a device that controls the electrical charge and discharge of the battery unit 10. In addition, the control device 70 of the present embodiment is configured to be capable of controlling ON/OFF of the first contactor 40 and the second contactor 50. In addition, the control device 70 is connected to various sensors, and can receive various information related to the battery system 1. For example, detected results of the electric current sensor 62 and the electric voltage sensor 64 are sent to the control device 70. This control device 70 is, for example, configured with a microcontroller. The control device 70 includes a communication interface, a central processing unit (CPU) that executes a command of a control program, a ROM (read only memory) that stores the program being executed by the CPU, a RAM (random access memory) that is used as a working area on which the program is expanded, and a storage, such as memory, which stores the program and various data. The control device 70 includes a disconnection event obtaining part 71, a determining part 72, and a disconnection control part 73. Incidentally, these configurations inside the control device 70 may be implemented with one or plural processors, or may be implemented with a circuit. Below, the configurations inside the control device 70 would be described.

### (a) Disconnection event obtaining part

The disconnection event obtaining part 71 acquires that the disconnection event has occurred, the disconnection event that requires turning OFF both the first contactor 40 and the second contactor 50 and thus disconnecting the battery unit 10 and the external load 100. Here, the wording "disconnection event" represents a state where it is required to forcibly stop the electrical charge and discharge due to some abnormality. As one example of this disconnection event, it is possible to refer an over electrical charge, an over electrical discharge, an excessive temperature increase, or an excessive electric current. In a situation where the excessive electric current is set to be a target, the disconnection event obtaining part 71 determines that the disconnection event is generated when an absolute value |Iₐ| of the electric current value detected by the electric current sensor 62 is equal to or more than a threshold Iₜₕ. Below, an explanation would be described while the disconnection event due to this excessive electric current is used as an example.

### (b) Determining part

The determining part 72 determines whether the direction of the electric current, at the time when the disconnection event is generated, is the discharge direction D or the charge direction C. Regarding the battery system 1 in accordance with the present embodiment, the electric current direction detected by the detector 60 is sent to the control device 70. In a situation where the disconnection event obtaining part 71 decides that the disconnection event is generated, the determining part 72 refers to the information sent from the detector 60 and then determines whether a present electric current direction is the discharge direction D or the charge direction C.

### (c) Disconnection control part

The disconnection control part 73 decides an order for turning OFF the first contactor 40 and the second contactor 50 based on the determined result of the determining part 72. Here, the disconnection control part 73 is configured to preferentially turn OFF a contactor, in which a forward electric current from the positive electrode terminal to the negative electrode terminal flows, among the first contactor 40 and the second contactor 50. The disconnection control part 73 in the present embodiment turns OFF the first contactor 40 at first, when the direction of the electric current is the discharge direction D. In addition, when the direction of the electric current is the charge direction C, it turns OFF the second contactor 50 at first. Although more details are described later, by preferentially turning OFF the contactor in which the forward electric current flows, it is possible to safely and promptly perform the electric current interruption implemented by the contactor. As this result, it is possible to inhibit the malfunction caused by contactor welding.

### (d) Another configuration

Further, the control device 70 in accordance with the present embodiment includes a limit determining part 74 and a malfunction determining part 75. In the limit determining part 74, a detection limit I_{range} is set that is an electric current value being larger than the threshold Iₜₕ of the disconnection event obtaining part 71. This limit determining part 74 determines whether the absolute value |Iₐ| of the electric current value detected by the electric current sensor 62 is equal to or more than the detection limit I_{range}, or not. Then, the malfunction determining part 75 executes a malfunction determining process of the electric current sensor 62 when the absolute value |Iₐ| of the electric current value is equal to or more than the detection limit I_{range}. By using the configuration described above, it is possible to inhibit a forced stop of the electrical charge and discharge when an erroneous detection is caused due to a malfunction of the electric current sensor 62.

In addition, the control device 70 includes a storage part 79. This storage part 79 stores various information, such as measurement results of the electric current sensor 62 and the electric voltage sensor 64 and a history of the electrical charge and discharge of the battery unit 10. In addition, the storage part 79 stores a threshold and a reference value that are used for various controls. It is preferable that the threshold and the reference value stored inside this storage part 79 are configured to be capable of being arbitrarily changed by an user.

### 2. Control method related to disconnection event

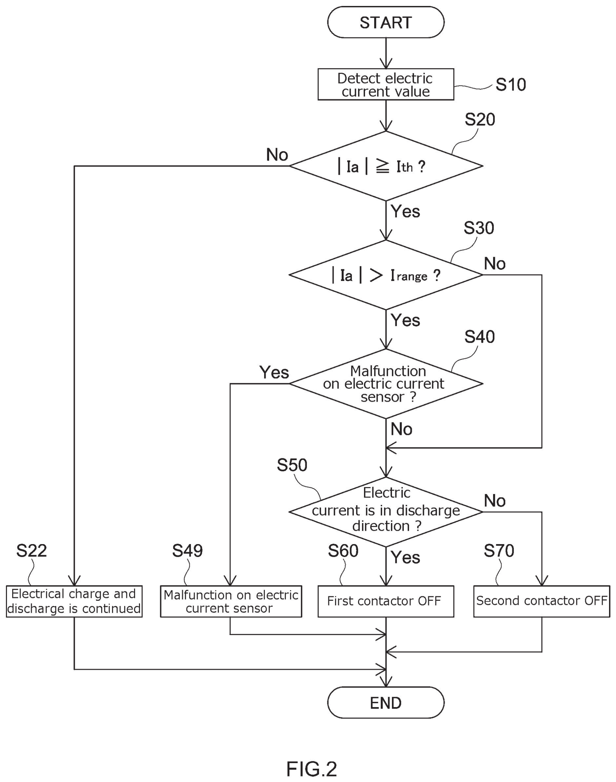

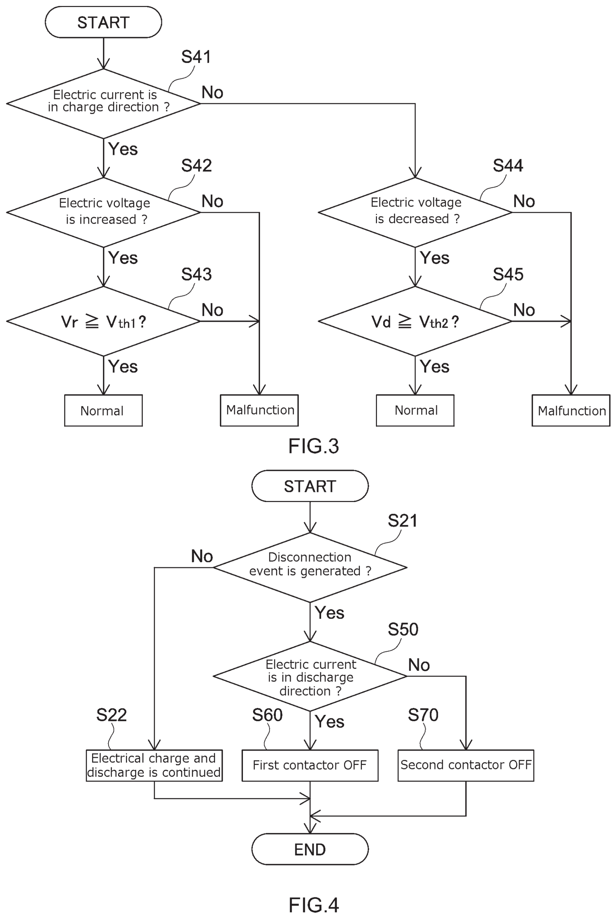

Below, a control method related to the disconnection event would be particularly explained. FIG. 2 is a flowchart that shows a control procedure related to the disconnection event of the battery system in accordance with the present embodiment. In addition, FIG. 3 is a flowchart that shows a detailed procedure of a malfunction determination on the electric current sensor in FIG. 2.

As shown in FIG. 2, the control method in accordance with the present embodiment includes an electric current value detecting step S10, a disconnection event determining step S20, a detection range determining step S30, a malfunction determining step S40, an electric current direction determining step S50, a first contactor disconnecting step S60, and a second contactor disconnecting step S70. Below, each of the steps would be described.

### (1) Electric current value detecting step S10

At the present step, the electric current sensor 62 of the detector 60 measures the electric current value Iₐ of the battery unit 10. Here, the electric current sensor 62 being arranged at the positive electrode output terminal 20 detects a positive electric current value when the battery system 1 is on the electrical charge, and detects a negative electric current value when it is on the electrical discharge. The detector 60 in the present embodiment converts these electric current values into the absolute value |Iₐ| and then sends it to the control device 70.

### (2) Disconnection event determining step S20

At the present step, the disconnection event obtaining part 71 compares the absolute value |Iₐ| of the electric current value of the battery unit 10 and the predetermined threshold Iₜₕ. Then, when the absolute value |Iₐ| of the electric current value is less than the threshold Iₜₕ (No at S20), it is understood that the disconnection event(an abnormality related to the excessive electric current) is not caused on the battery unit 10. In that situation, the control device 70 ends the control related to the disconnection event after an instruction, representing that the electrical charge and discharge is continued, is performed (S22).

On the other hand, when the absolute value |Iₐ| of the electric current value is equal to or more than the threshold Iₜₕ (Yes at S20), it can be decided that the abnormality related to the excessive electric current is caused on the battery system 1. In that situation, the disconnection event obtaining part 71 notifies to the limit determining part 74 a statement that the disconnection event is generated. Accordingly, the processing proceeds to the detection range determining step S30.

### (3) Detection range determining step S30

At the present step, the limit determining part 74 compares the absolute value |Iₐ| of the electric current value of the battery unit 10 and the detection limit I_{range}. Then, when the absolute value |Iₐ| of the electric current value is less than the detection limit I_{range} (No at S30), it is decided that the electric current sensor 62 is normal. In that situation, the limit determining part 74 notifies to the determining part 72 a statement that the notification of the disconnection event generation by the disconnection event obtaining part 71 is appropriate. Accordingly, the processing proceeds to the electric current direction determining step S50.

On the other hand, when the absolute value |Iₐ| of the electric current value is equal to or more than the detection limit I_{range} (Yes at S30), there is a possibility that the malfunction is caused on the electric current sensor 62. In that situation, the limit determining part 74 notifies the malfunction determining part 75 a statement that the abnormality of being equal to or more than the detection limit I_{range} is caused. Accordingly, the processing proceeds to the malfunction determining step S40.

### (4) Malfunction determining step S40

At the present step, the malfunction determining part 75 determines whether the malfunction is caused on the electric current sensor 62 or not. As shown in FIG. 3, at this malfunction determining step S40, firstly, it determines whether the electric current direction detected by the electric current sensor 62 is the charge direction C or not (S41). Here, when the electric current direction is the charge direction C (Yes at S41), the malfunction determining part 75 determines whether the electric voltage sensor 64 has detected an increase in the electric voltage or not (S42). Then, the increase in the electric voltage is detected (Yes at S42), the malfunction determining part 75 determines whether an electric voltage increase amount Vᵣ is equal to or more than a first electric voltage threshold Vₜₕ₁ or not (S43). At that time, when the electric voltage increase amount Vᵣ is equal to or more than the first electric voltage threshold Vₜₕ₁ (Yes at S43), it is decided that the electric current sensor 62 is normal and the over electrical charge is caused. On the other hand, when the increase in the electric voltage is not detected by the electric voltage sensor 64 (No at S42), or when the electric voltage increase amount Vᵣ is less than the first electric voltage threshold Vₜₕ₁ (No at S43), it means that the over electrical charge is detected even though an abnormal increase in the electric voltage is not caused. In that situation, the malfunction determining part 75 decides that the malfunction is caused on the electric current sensor 62.

On the other hand, when the electric current direction is the discharge direction D (No at S41), the malfunction determining part 75 determines whether an decrease in the electric voltage is detected by the electric voltage sensor 64 or not (S44). Then, when the decrease in the electric voltage is detected (Yes at S44), it determines whether an electric voltage decrease amount V_{d} is equal to or less than a second electric voltage threshold Vₜₕ₂ or not (S45). And then, when the electric voltage decrease amount V_{d} is equal to or less than the second electric voltage threshold Vₜₕ₂ (Yes at S45), it is decided that the electric current sensor 62 is normal and that the over electrical discharge is caused. On the other hand, when the decrease in the electric voltage is not detected by the electric voltage sensor 64 (No at S44) or when the electric voltage decrease amount V_{d} is more than the second electric voltage threshold Vₜₕ₂ (No at S45), it means that the over electrical discharge is detected even though an abnormal decrease in the electric voltage is not caused. In that situation, it is decided that the malfunction is caused on the electric current sensor 62.

Then, when the above described malfunction determination decides that the malfunction is caused on the electric current sensor 62, the malfunction determining part 75 notifies the disconnection event obtaining part 71 a statement that the malfunction is caused on the electric current sensor 62 (S49 in FIG. 2). In that situation, the disconnection event obtaining part 71 cancels the statement of the disconnection event generation, and then the control related to the disconnection event is ended while the electrical charge and discharge of the battery unit 10 is continued. On the other hand, when the malfunction determination decides that the electric current sensor 62 is normal, the malfunction determining part 75 notifies the determining part 72 a statement that the disconnection event is generated. Accordingly, the processing proceeds to the electric current direction determining step S50.

### (5) Electric current direction determining step S50

At the present step, the determining part 72 determines whether the electric current direction is the discharge direction D or the charge direction C, based on the information sent from the detector 60. Then, when the electric current direction is the discharge direction D (Yes at S50), the determining part 72 sends a statement representing the disconnection event during the electrical discharge to the disconnection control part 73, and the processing proceeds to the first contactor disconnecting step S60. On the other hand, when the electric current direction is the charge direction C (No at S50), the determining part 72 sends a statement representing the disconnection event during the electrical charge to the disconnection control part 73, and the processing proceeds to the second contactor disconnecting step S70.

### (6) First contactor disconnecting step S60

As described above, the disconnection control part 73 in the present embodiment is configured to firstly turn OFF the first contactor 40 when the direction of the electric current is the discharge direction D. In other words, when it receives the statement that the disconnection event during the electrical discharge is generated, the disconnection control part 73 sends a disconnection signal to the first contactor 40. The first contactor 40, which has received the disconnection signal, makes the first movable contact point 46 move away from the first positive electrode terminal 42 and the first negative electrode terminal 44. Accordingly, the first contactor 40 becomes OFF and thus the discharge electric current is interrupted. In this case, the electric current in the discharge direction D is flowing, thus the forward electric current flows at the first contactor 40 and the backward electric current flows at the second contactor 50. In that situation, the electric current can be interrupted by the contactor in which the forward electric current flows if the first contactor 40 is firstly turned OFF, and thus it is possible to inhibit the welding of the contactor due to a sudden heat up. And then, the disconnection control part 73 sends the disconnection signal to the second contactor 50 after the first contactor 40 is turned OFF. Accordingly, it is possible to safely disconnect the second contactor 50 in which the backward electric current flows.

### (7) Second contactor disconnecting step S70

On the other hand, the disconnection control part 73 in the present embodiment firstly turns OFF the second contactor 50 when the direction of the electric current is the charge direction C. In other words, when the statement that the disconnection event during the electrical charge is generated is received, the disconnection control part 73 sends the disconnection signal to the second contactor 50. The second contactor 50 having received the disconnection signal makes the second movable contact point 56 move away from the second positive electrode terminal 52 and the second negative electrode terminal 54. Accordingly, the second contactor 50 is turned OFF, and the charge electric current is interrupted. Contrarily to the above described the electric current in the discharge direction D, when the electric current flows in the charge direction C, the backward electric current flows at the first contactor 40 and the forward electric current flows at the second contactor 50. Regarding the disconnection event during the electrical charge as described above, it is possible by firstly turning OFF the second contactor 50 to interrupt the electric current at the contactor in which the forward electric current flows, and thus it is possible to inhibit the welding of the contactor due to the sudden heat up. And then, the disconnection control part 73 turns OFF the second contactor 50 and then sends the disconnection signal to the first contactor 40. Accordingly, it is possible to safely disconnect the first contactor 40 in which the backward electric current flows.

As described above, the battery system 1 in accordance with the present embodiment is configured to have the forward electric current flowed at the first contactor 40 when the electric current flows in the discharge direction D and have the forward electric current flowed at the second contactor 50 when the electric current flows in the charge direction C. And then, this battery system 1 is configured to firstly turn OFF the first contactor 40 when the discharge electric current is interrupted and to firstly turn OFF the second contactor 50 when the charge electric current is interrupted. In other words, the battery system 1 in accordance with the present embodiment is configured to preferentially turn OFF the contactor, in which the forward electric current flows, for any of the electrical charge and the electrical discharge. Accordingly, the interruption of the electric current with the contactor can be performed safely and promptly, and thus it is possible to inhibit the malfunction caused by the welding of the contactor. As this result, the contactor can be properly operated after the disconnection event ends, and thus it is possible to promptly restart the battery system 1. In addition, an unintended continuity caused by the welding of the contactor can be inhibited, and thus it is possible to significantly contribute in enhancing a safety property of the battery system 1.

Incidentally, as described above, at the first contactor disconnecting step S60 and the second contactor disconnecting step S70, the contactor in which the forward electric current flows is turned OFF and then the contactor in which the backward electric current flows is turned OFF. At that time, a time difference (a delay time) for making these two contactors be OFF is preferably equal to or more than 10 ms, further preferably equal to or more than 20 ms, or preferably in particular equal to or more than 30 ms. Accordingly, it is possible to further suitably reduce a possibility that the contactor in which the backward electric current flows is forcibly turned OFF. On the other hand, an upper limit of the delay time is not particularly restricted, and thus may be equal to or less than 100 ms, may be equal to or less than 90 ms, or may be equal to or less than 80 ms.

### <Other embodiments>

Above, the first embodiment of the herein disclosed battery system has been explained. Incidentally, the above described embodiment is not intended to restrict the herein disclosed battery system. The herein disclosed technique semantically covers other embodiments as being explained below.

### 1. Second embodiment

As described above, the battery system 1 in accordance with the first embodiment is to target the disconnection event caused by the excessive electric current. Thus, the battery system 1 in accordance with the first embodiment determines, as shown in FIG. 2, the generation of the excessive electric current at the electric current value detecting step S10 to the malfunction determining step S40. However, a cause of the disconnection event is not to restrict the herein disclosed technique, and thus an abnormality other than the excessive electric current may be treated as the disconnection event. As described above, it is possible to refer the over electrical charge, the over electrical discharge, the excessive temperature increase, or the like, as an example of another cause of the disconnection event. In that situation, as shown in FIG. 4, the control method related to the disconnection event is configured with the disconnection event determining step S21, the electric current direction determining step S50, the first contactor disconnecting step S60, and the second contactor disconnecting step S70. This control method shown in FIG. 4 determines at the disconnection event determining step S21 whether the above described cause of the disconnection event is generated or not. Then, when it decides that the disconnection event is generated (Yes at S21), the electric current direction determining step S50 is preformed with the same procedure as the first embodiment, and then an order for disconnecting the contactors is decided. Even with the control method having the above described configuration, it is possible to inhibit the contactor, in which the backward electric current flows, from being forcibly turned OFF, and thus the welding of the contactor due to the sudden heat up can be suppressed.

### 2. Third embodiment

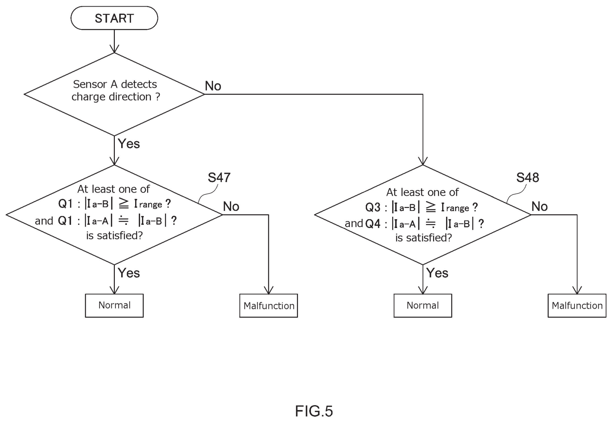

In addition, the first embodiment performs the malfunction determining step S40 according to the procedure shown in FIG. 3. However, the malfunction determining step S40 is not restricted to the procedure shown in FIG. 3. For example, the malfunction determining step S40 may be performed with a procedure as shown in FIG. 5. Incidentally, to perform the malfunction determining step S40 shown in FIG. 5, it is required to provide two electric current sensors on an electrically conductive pathway of the battery unit 10. And then, in this third embodiment, at the detection range determining step S30 of FIG. 2, the malfunction determining step S40 shown in FIG. 5 is performed when the absolute value |I_{a-A}| of the electric current value measured by one of the electric current sensors (which is referred to as "electric current sensor A", below) is equal to or more than the detection limit I_{range} (Yes at S30). At the malfunction determining step S40 shown in FIG. 5, it determines whether the electric current direction detected by the electric current sensor A is the charge direction C or not (S46). Here, when the electric current sensor A detects the charge direction C (Yes at S46), the malfunction determining part 75 determines about two points, "Q1: whether an absolute value |I_{a-B}| of the charge electric current measured by the other one of the electric current sensors (which is referred to as "electric current sensor B", below) is equal to or more than the detection limit I_{range} or not" and "Q2: whether the electric current value of the electric current sensor A and the electric current value of the electric current sensor B are similar to each other (|I_{a-A}| ≈ |I_{a-B}|) or not" (S47). When at least one of these two conditions is satisfied (Yes at S47), it can be estimated that both of measured values of the electric current sensor A and the electric current sensor B are correct and thus the malfunction determining part 75 decides that the electric current sensor A is normal. On the other hand, when all of the conditions of Step S47 are not satisfied (No at S47), it can decide that the malfunction is caused on the electric current sensor A.

On the other hand, when the electric current direction detected by the electric current sensor A is the discharge direction D (No at S46), the malfunction determining part 75 determines about two points, "Q3: whether an absolute value |I_{a-B}| of the discharge electric current measured by the electric current sensor B is equal to or more than the detection limit I_{range} or not" and "Q4: whether the electric current value of the electric current sensor A and the electric current value of the electric current sensor B are similar to each other (|I_{a-A}| ≈ |I_{a-B}|) or not" (S48). When at least one of these two conditions is satisfied (Yes at S48), it can be estimated that both of measured values of the electric current sensor A and the electric current sensor B are correct and thus the malfunction determining part 75 decides that the electric current sensor A is normal. On the other hand, when all of the conditions of Step S48 are not satisfied (No at S48), it can decide that the malfunction is caused on the electric current sensor A.

Incidentally, regarding the determination for the above described Q2 and Q4, when a difference (|I_{a-A}|-|I_{a-B}|) between the electric current value |I_{a-A}| of the electric current sensor A and the electric current value |I_{a-B}| of the electric current sensor B is equal to or less than 20A (strictly, equal to or less than 10A, or further strictly equal to or less than 10A), it is possible to decide that the electric current value of the electric current sensor A and the electric current value of the electric current sensor B are similar. However, the numerical value described above is an example for a reference when it is decided to be "similar", and thus it is not to restrict the herein disclosed technique.

### 3. Fourth embodiment

In addition, it is preferable that the control device 70 of the battery system 1 is configured to be capable of sending information, which is related to the disconnection event and obtained by the disconnection event obtaining part 71, to an outside control part (not shown in drawings) that controls the external load 100. And then, it is preferable that the outside control part of the external load 100 controls an operation of the external load 100 based on the information related to the disconnection event before the disconnection control part 73 of the battery system 1 performs the disconnection on the contactor. For example, when information representing a generation of the excessive electric current is received from the battery system 1, the outside control part controls the operation of the external load 100 so as to solve this excessive electric current. Accordingly, there is a possibility that the disconnection event can be solved before the contactor is forcibly disconnected, and thus it is possible to further suitably inhibit the deterioration of the contactor due to the forced disconnection on the electric current. And then, when the disconnection event is not solved by the control on the external load 100, it is good that the disconnection control part 73 of the battery system 1 turns OFF the contactor in accordance with the above described procedure. Accordingly, it is possible to solve the disconnection event, further safely.

### 4. Fifth embodiment

As described above, at the electric current value detecting step S10 of the first embodiment, the detector 60 converts the electric current value (a positive electric current value and a negative electric current value) measured by the electric current sensor 62 into the absolute value |Iₐ|, and then it is used for the determination of the disconnection event obtaining part 71. However, the conversion into this absolute value is not to restrict the herein disclosed technique. The detector 60 may send the electric current value (the positive electric current value and the negative electric current value), which is measured by the electric current sensor 62, directly to the disconnection event obtaining part 71. In that situation, the disconnection event obtaining part 71 sets two kinds of thresholds, a threshold Iₜₕ₁ for the positive electric current value and a threshold Iₜₕ₂ for the negative electric current value. And then, when the positive electric current value is received, the disconnection event obtaining part 71 decides whether a detected result of the electric current sensor 62 is equal to or more than the positive threshold Iₜₕ₁ or not. On the other hand, when the negative electric current value is received, the disconnection event obtaining part 71 decides whether the detected result of the electric current sensor 62 is equal to or less than the negative threshold Iₜₕ₂ or not. Even if the configuration described above is used, it is possible to decide the generation of the disconnection event, even without performing the conversion into the absolute value |I₄|.

### 5. Sixth embodiment

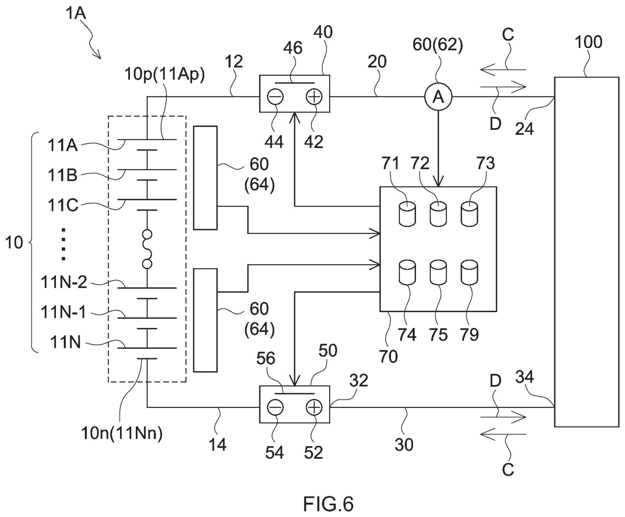

The first to fifth embodiments are based on the assumption of using the battery system 1 that has the configuration shown in FIG. 1. However, the herein disclosed technique semantically covers an embodiment in which a connection direction of the first contactor and the second contactor is made to be reverse to the configuration shown in FIG. 1. FIG. 6 is a circuit view that shows the battery system in accordance with a sixth embodiment. Regarding a battery system 1A in accordance with this sixth embodiment, the first negative electrode terminal 44 of the first contactor 40 is connected to the positive electrode 10p of the battery unit 10. On the other hand, the first positive electrode terminal 42 of the first contactor 40 is connected via the positive electrode output terminal 20 to the external load 100. On the other hand, the second negative electrode terminal 54 of the second contactor 50 is connected to the negative electrode 10n of the battery unit 10. And then, the second positive electrode terminal 52 of the second contactor 50 is connected via the negative electrode output terminal 30 to the external load 100. In a situation where the battery system 1A having the above described configuration is used, the disconnection control part 73 firstly turns OFF the second contactor 50 when the direction of the electric current is the discharge direction D, and firstly turns OFF the first contactor 40 when the direction of the electric current is the charge direction C. Accordingly, even if the connection direction of the first contactor 40 and the second contactor 50 is made to be reverse, it is possible to preferentially turn OFF the contactor, in which the forward electric current flows.

Above, although the herein disclosed technique has been explained in detail, these are merely illustrations and thus are not construed as limiting the scope of the appended claims. The technique recited in claims contains matters in which the above-illustrated specific example is variously deformed or changed.

## Claims

1. A battery system (1), comprising:
a battery unit (10) that comprises a plurality of secondary batteries connected in series;
a positive electrode output terminal (20) that connects a positive electrode of the battery unit (10) and an external load (100);
a negative electrode output terminal (30) that connects a negative electrode of the battery unit (10) and the external load (100);
a first contactor (40) that is provided between the battery unit (10) and the positive electrode output terminal (20) and that comprises a positive electrode terminal and a negative electrode terminal;
a second contactor (50) that is provided between the battery unit (10) and the negative electrode output terminal (30) and that comprises a positive electrode terminal and a negative electrode terminal; and
a detector (60) for detecting whether a direction of an electric current flowing between the battery unit (10) and the external load (100) is a discharge direction (D) in which the battery unit (10) discharges or a charge direction (C) in which the battery unit (10) is charged; and
a control device (70), wherein
the control device (70) comprises:
a disconnection event obtaining part (71) that acquires that a disconnection event has occurred, the disconnection event that requires both the first contactor (40) and the second contactor (50) to be turned OFF so as to disconnect the battery unit (10) and the external load (100);
a determining part (72) that determines whether a direction of the electric current when the disconnection event is generated is the discharging direction (D) or the charging direction (C); and
a disconnection control part (73) that decides the order for turning OFF the first contactor (40) and the second contactor (50) based on a determined result of the determining part (72), and
the disconnection control part (73) is configured to preferentially turn OFF a contactor, through which a forward current flows from the positive electrode terminal to the negative electrode terminal, among the first contactor (40) and the second contactor (50).

2. The battery system (1) according to claim 1, wherein
the first contactor (40) comprises:
a first positive electrode terminal (42) that is connected to a positive electrode of the battery unit (10);
a first negative electrode terminal (44) that is connected via the positive electrode output terminal (20) to the external load (100), and
the second contactor (50) comprises:
a second positive electrode terminal (52) that is connected to a negative electrode of the battery unit (10); and
a second negative electrode terminal (54) that is connected via the negative electrode output terminal (30) to the external load (100), and
the disconnection control part (73) is configured to firstly turn OFF the first contactor (40) when the direction of the electric current is the discharging direction (D) and to firstly turn OFF the second contactor (50) when the direction of the electric current is the charging direction (C).

3. The battery system (1) according to claim 1 or 2, wherein
the detector (60) comprises an electric current sensor (62) that detects an electric current value flowing at the battery unit (10).

4. The battery system (1) according to claim 3, wherein
the disconnection event obtaining part (71) determines that the disconnection event has been generated when the electric current value detected by the electric current sensor (62) is equal to or more than a predetermined threshold.

5. The battery system (1) according to claim 4, wherein
the control device (70) comprises:
a limit determining part (74) that has a detection limit set thereto, the detection limit being an electric current value larger than the threshold being predetermined by the disconnection event obtaining part (71), and that determines whether an absolute value of the electric current value detected by the electric current sensor (62) is equal to or more than the detection limit or not; and
a malfunction determining part (75) that executes a malfunction determining process on the electric current sensor (62) when an absolute value of the electric current value is equal to or more than the detection limit.

6. The battery system (1) according to claim 5, wherein
the disconnection event obtaining part (71) determines that the disconnection event has been generated when it is determined with the malfunction determining process that a malfunction is not generated on the electric current sensor (62).

7. The battery system (1) according to claim 5 or 6, wherein
the control device (70) executes a predetermined malfunction process when it is determined with the malfunction determining process that a malfunction is generated on the electric current sensor (62).
